# EUROPEAN PATENT APPLICATION

(11) **EP 3 136 059 A1**
(43) Date of publication of application: **01.03.2017**
(21) Application number: 15306325.0
(22) Date of filing: 27.08.2015
(51) Int. Cl.: G01F 1/10, G01F 1/11, G01F 15/14, G01F 1/05, G01F 15/08

(54) **RELEASE MECHANISM FOR TRAPPED AIR IN A FLUID FLOW METER**

(71) Applicant: Itron Global SARL, Liberty Lake WA 99019 (US)
(72) Inventor: LEMETAYER, Didier, Liberty Lake, WA Washington 99019 (US); GÉHANT, Benjamin, Liberty Lake, WA Washington 99019 (US)
(74) Representative: Morrall, Jonathan Ian McLachlan

(57) **Abstract**

Mechanisms and methods for minimizing trapped air in a fluid flow device are disclosed. An example device includes a first chamber having an inlet and outlet for substantially horizontal fluid flow, a second chamber at least partially openly disposed above the first chamber, and a tube vertically disposed in the second chamber from the second chamber ceiling to the first chamber. When fluid flows from the inlet to the outlet, at least a portion of the fluid flows into the second chamber and air collected at its ceiling moves down the tube and into the first chamber. The ceiling of the second chamber may be contoured such that a first internal height at a first location of the second chamber is greater than a second internal height at a second location, forming a pocket at the ceiling at the first location where air can collect before entering the tube.

## Description

### FIELD OF THE DISCLOSURE

This disclosure relates generally to devices through which fluid fills or flows (e.g., fluid meters or flowmeters), and, more particularly, to releasing air in such devices.

### BACKGROUND

Due to the nature of fluid (e.g., water, or other types of liquid) and air, in a device in which fluid enters and flows, air or bubbles could become trapped at the top of the device with nowhere to escape, which may eventually lead to such problems as internal rust. In a device such as a flowmeter, in which one or more components, such as a meter register, may be located above or at the top of the flow of fluid, trapped air and/or its effects (e.g., rust) may cause metrological differences that may affect repeatability and sensitivity of meter readings (e.g., counting and/or measuring) and/or adjustments (e.g., calibrations). In such devices, minimal or no air should remain at the top to prevent these and other problems.

### BRIEF DESCRIPTION OF THE DRAWINGS

FIG. 1 is a diagram illustrating a cross-section of an example flowmeter device.
FIG. 2 is a diagram illustrating a cross-section of an example flowmeter device including a release tube, according to an embodiment of the present disclosure.
FIG. 3 is a diagram illustrating a cross-section of an example flowmeter device including a contoured ceiling, according to an embodiment of the present disclosure.
FIG. 4 is a diagram illustrating a cross-section of an example flowmeter device including a release tube and a contoured ceiling, according to an embodiment of the present disclosure.
FIG. 5 is an enlarged view of the top of an example flowmeter, such as the flowmeter shown in FIG. 4, according to an embodiment of the present disclosure.
FIGs. 6A-6C are general block diagrams illustrating cross-sections of example fluid flow devices, according to embodiments of the present disclosure.
FIGs. 7-12 are flowcharts illustrating example process flows that may be executed using flowmeters and/or fluid flow devices of FIGs. 2-5 and FIGs. 6A-6C, according to embodiments of the present disclosure.

### DETAILED DESCRIPTION

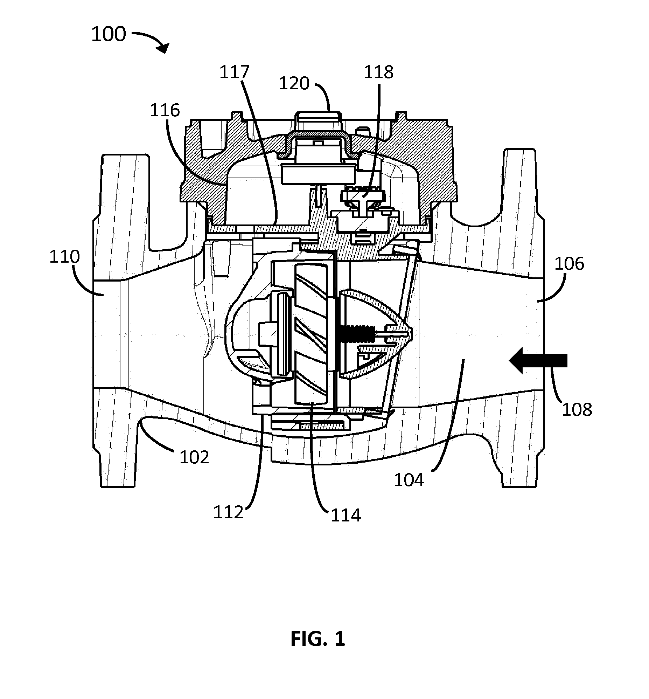

Conventionally, a fluid meter or flowmeter (e.g., a water meter), can include a reservoir having an inlet and an outlet, and a measurement chamber. The measurement chamber can be, for example, a turbine measurement chamber, an oscillating piston measurement chamber, a static measurement chamber (e.g., an ultrasonic measurement chamber), etc. The measurement chamber can include a register that can count or measure the flow of fluid. A cross-section of an example flowmeter is shown in FIG. 1. In the particular example shown in FIG. 1, a turbine measurement system is shown. As would be understood by those of ordinary skill in the relevant art, other measurement systems may also be used as noted above.

As shown in FIG. 1, an example flowmeter 100 includes a reservoir can 102 housing a reservoir 104. Reservoir can 102 includes an inlet 106 through which fluid (e.g., water) can enter reservoir 104 in the direction shown by arrow 108. Reservoir can 102 also includes an outlet 110, through which fluid can exit reservoir 104. In this way, reservoir 104 is an area where a mainstream of fluid flows through flowmeter 100. Flowmeter 100 also includes a stator component 112. Stator component 112 is positioned in reservoir 104 and includes a measurement device (in this example a turbine 114 that turns as fluid flows through reservoir 104). Flowmeter 100 also includes a gear box 116 that is located above reservoir 104. A top portion 117 of stator component 112 separates gear box 116 from reservoir 104; however, top portion 117 is at least partially open to allow fluid to flow from reservoir 104 into gear box 116. In this example embodiment, gear box 116 includes a coupling 118 that couples turbine 114 to a register 120 to provide fluid flow measurement data to register 120 from turbine 114. Register 120 may be located at or near the top of, or above, gear box 116. In the example shown, register 120 is at or near the top of gear box 116, at its center. In other embodiments, register 120 may be located at or near the top of the gear box at a location other than the gear box center.

It can be seen that a ceiling of gear box 116 is shaped like a dome. Whether the ceiling of gear box 116 is shaped like a dome, is in the form of another shape, or is consistently level (i.e., flat or straight), as fluid flows into reservoir 104 and gear box 116, air can become trapped at the top, or ceiling, of gear box 116, and unable to escape. The trapped air can cause unwanted effects, such as rust for example, at coupling 118, register 120, and/or between coupling 118 and register 120, that can affect the performance (e.g., output accuracy, output consistency, sensitivity, etc.) of the meter. Ideally, gear box 116 would be filled completely with fluid (or at least covering components of coupling 118 and register 120) to minimize, or even avoid, these unwanted effects. Therefore, a way to remove trapped air from the gear box is desirable.

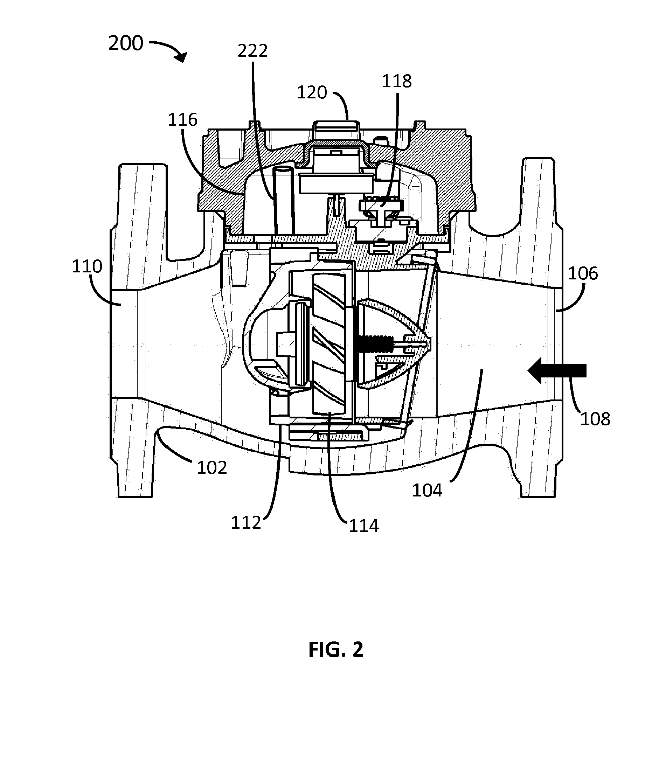

FIG. 2 illustrates a cross-section of an example flowmeter 200 including an air release tube, according to an embodiment of the present disclosure. Flowmeter 200 is similar to flowmeter 100 of FIG. 1, except with the addition of a tube 222 that has a top opening as close as possible to the ceiling of gear box 116, and a bottom opening that opens into reservoir 104. When fluid flows into reservoir 104 and gear box 116, air that collects toward the ceiling of gear box 116 moves through tube 222 into reservoir 104 and out of outlet 110, allowing gear box 116 to fill more completely with fluid. To maximize the amount of fluid filling gear box 116, the top of tube 222 should be in close proximity of (i.e., as close as possible to) the ceiling of gear box 116 while still allowing air to flow into the tube. While a small amount of air may still be present at the ceiling of gear box 116, as long as fluid is able to cover components of the coupling and register, unwanted effects such as rust will be minimized or avoided at those components, and degradation of the performance of the flowmeter will also be minimized or avoided. In an embodiment, tube 222 can be molded as part of top portion 117 of stator component 112. In another embodiment, tube 222 can be a standalone part fitted into or through a hole in top portion 117 of stator component 112. In this embodiment, tube 222 may be made of any material that one of ordinary skill in the relevant art would find appropriate for such a device.

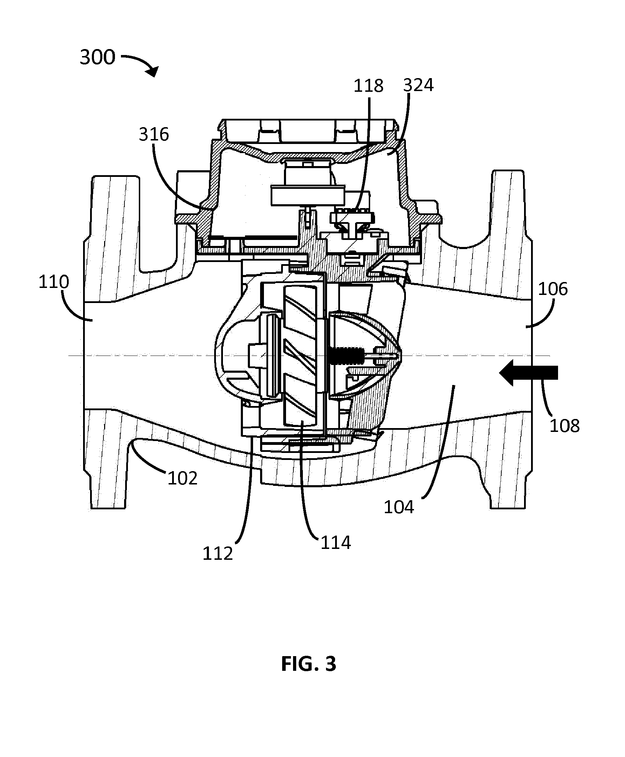

FIG. 3 shows a similar concept directed toward keeping the gear box components covered by fluid. FIG. 3 illustrates a cross-section of an example flowmeter 300 including a contoured ceiling, according to an embodiment of the present disclosure. Flowmeter 300 is similar to flowmeter 100 of FIG. 1, except that gear box 116 is replaced with gear box 316, having a contoured ceiling in which an internal height of the gear box is greater in a first location than it is at a second location (e.g., where components of the coupling, register, etc. are located at the second location). In the example shown, an internal height of the gear box at its outer edge is greater than an internal height of the gear box at its center (where the coupling, register, etc., are located). Such a contoured ceiling creates a pocket 324 at or near, and in this example around, the top of gear box 316 that is higher than the components of gear box 316. When fluid flows into reservoir 104 and gear box 316, air collects in pocket 324 and away from the ceiling center where the components are located. While air remains trapped in pocket 324, fluid is allowed to fill gear box 316 enough to more fully cover the gear box components and minimize or avoid the unwanted effects discussed above. The contour and/or heights needed to accomplish this goal may depend on various factors (e.g., the type of fluid, the speed of the flow, etc.).

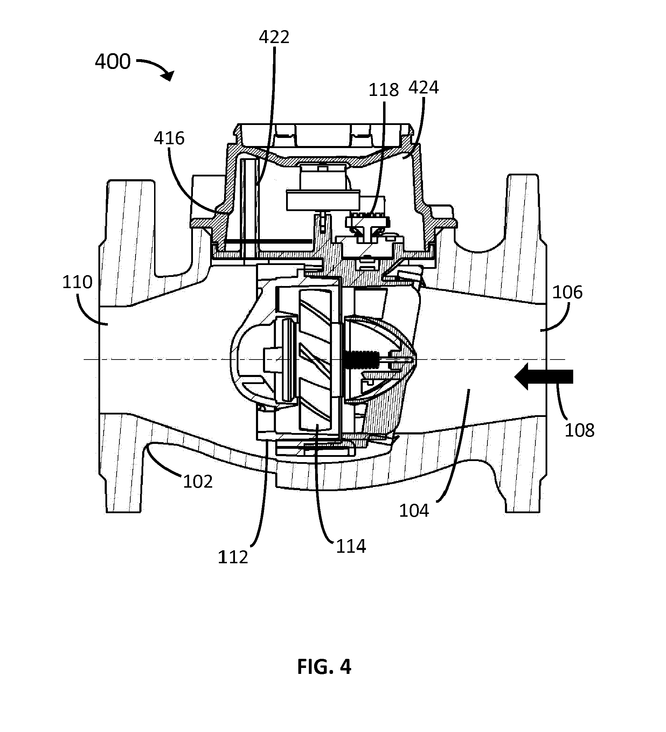

FIG. 4 shows a combination of the concepts shown in FIGs. 2 and 3. FIG. 4 illustrates a cross-section of an example flowmeter 400 including an air release tube and a contoured ceiling, according to an embodiment of the present disclosure. In FIG. 4, tube 422 is placed such that the top opening of the tube is as close as possible to the ceiling of gear box 416 inside of pocket 424, and the bottom of tube 422 opens into reservoir 104. In an embodiment, a height of tube 422 is greater than the ceiling of gear box 416 at its center (i.e., where the components are located) and less than the ceiling of gear box 416 at its outer edge (i.e., in the pocket). With this configuration, when fluid flows into reservoir 104 and gear box 416, air collects in pocket 424 (away from the ceiling center where the components are located) and moves down tube 422 into reservoir 104 and out of outlet 110, allowing coverage of the components of gear box 416 with fluid, minimizing or avoiding the unwanted effects discussed above. As discussed previously, in an embodiment, tube 422 can be molded as part of a top portion of stator component 112. In another embodiment, tube 422 can be a standalone part fitted into or through a hole in the top portion of stator component 112. In this embodiment, tube 422 may be made of any material that one of ordinary skill in the relevant art would find appropriate for such a device.

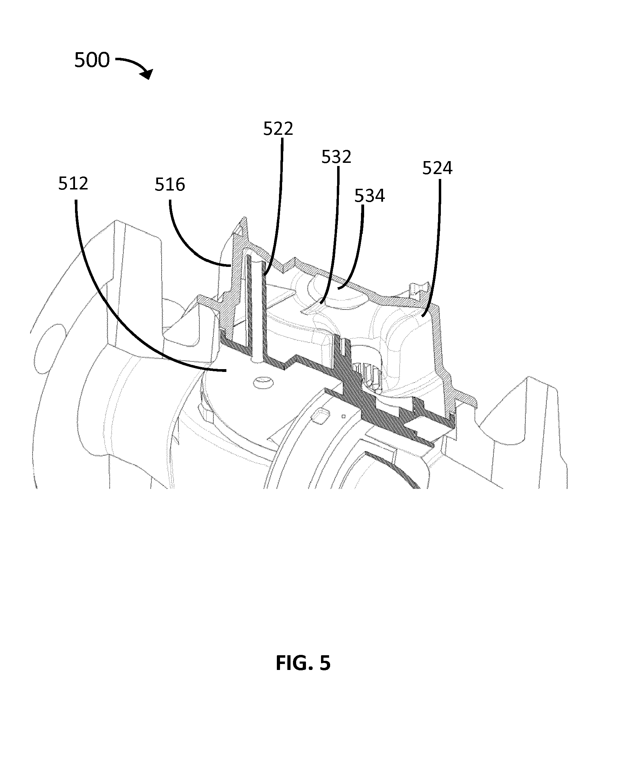

FIG. 5 is an enlarged view 500 of the top of an example flowmeter, such as flowmeter 400 shown in FIG. 4, from a vantage point below flowmeter 400, according to an embodiment of the present disclosure. View 500 illustrates another feature that may further improve upon the embodiments previously discussed. In an embodiment, the ceiling of gear box 516 includes a channel indentation 532 that is directed outward from ceiling center 534, where the components would be located. Channel indentation 532 serves to direct air that may collect in the area of the components (in this example, at ceiling center 534) toward pocket 524 (in this example, at the outer edge of gear box 516). Channel indentation 532 may be used in embodiments that include a tube such as tube 222/422/522 (of FIGs. 2, 4, and 5), or may be used in embodiments that do not include a tube (such as the embodiment show in FIG. 3). In the particular example shown in FIG. 5, tube 522 is shown as molded as part of stator component 512. As stated earlier, in an embodiment, tube 522 may be a standalone part fitted into or through a hole in the top portion of stator component 512.

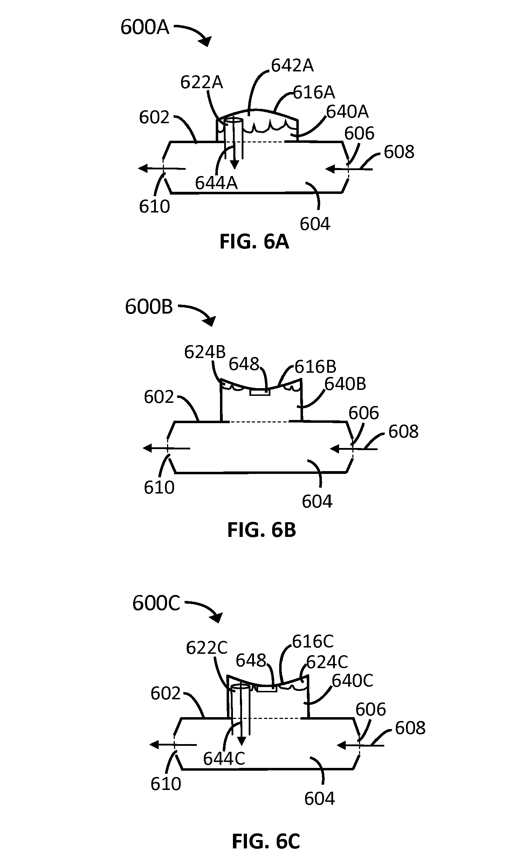

FIGs. 6A-6C are general block diagrams illustrating cross-sections of example fluid flow devices and the concepts described above, according to embodiments of the present disclosure. In FIG. 6A, example device 600A is similar in concept to example flowmeter 200 of FIG. 2. Example device 600A includes a first chamber 602 having a reservoir 604, an inlet 606, and an outlet 610. Example device 600A also includes a second chamber 616A that is at least partially open to first chamber 602 and a tube 622A that has an open top end as close as possible to the top of the ceiling of second chamber 616A, and an open bottom end that opens into first chamber 602. When fluid 640A flows from inlet 606 to outlet 610 (in the direction of arrow 608) through first chamber 602, at least a portion of fluid flows into second chamber 616A, and as fluid 640A fills second chamber 616A, air 642A collected at the ceiling of second chamber 616A moves down tube 622A in the direction of arrow 644A into first chamber 602 and out outlet 610.

In FIG. 6B, example device 600B is similar in concept to example flowmeter 300 of FIG. 3. Example device 600B includes a first chamber 602 having a reservoir 604, an inlet 606, and an outlet 610. Example device 600B also includes a second chamber 616B that is at least partially open to first chamber 602 and has a ceiling contoured such that an internal height of second chamber 616B at a first location (here, its outer edge) is greater than in internal height of second chamber 616B at a second location (here, its center, where components are located). In this way, a pocket 624B is formed at the second chamber ceiling at its outer edge. When fluid 640B flows from inlet 606 to outlet 610 (in the direction of arrow 608) through first chamber 602, at least a portion of fluid 640B flows into second chamber 616B, and as the fluid 640B fills second chamber 616A, air moves away from the lower portion of the ceiling (here, the ceiling center) of second chamber 616B and is collected in pocket 624B at the higher portion of the ceiling (here, the outer edge of the ceiling). In this way, items or components (such as component 648 found in the ceiling center of second chamber 616B in this example) will become fully covered by fluid.

In FIG. 6C, example device 600C is similar in concept to example flowmeter 400 of FIG. 4. Example device 600C includes a first chamber 602 having a reservoir 604, an inlet 606, and an outlet 610. Example device 600C also includes a second chamber 616C that is at least partially open to first chamber 602 and has a ceiling contoured such that an internal height of second chamber 616C (at its outer edge in this example) is greater than an internal height of second chamber 616C where components are located (at its center, in this example), forming pocket 624C at the outer edge of the second chamber ceiling. Second chamber 616C also includes a tube 622C that has an open top end as close as possible to the top of the ceiling of the second chamber 616C in pocket 624C, and an open bottom end that opens into first chamber 602. When fluid 640C flows from inlet 606 to outlet 610 (in the direction of arrow 608) through first chamber 602, at least a portion of fluid 640C flows into second chamber 616C, and as fluid 640C fills second chamber 616C, air is collected in pocket 624C at the ceiling of second chamber 616C and moved down tube 622C in the direction of arrow 644C into first chamber 602 and out outlet 610.

In examples shown in FIGs. 6A, 6B, and 6C, a channel indentation such as channel indentation 532 of FIG. 5 may be used to direct air across the ceiling of second chamber 616 from the lower part of the ceiling toward the higher part of the ceiling.

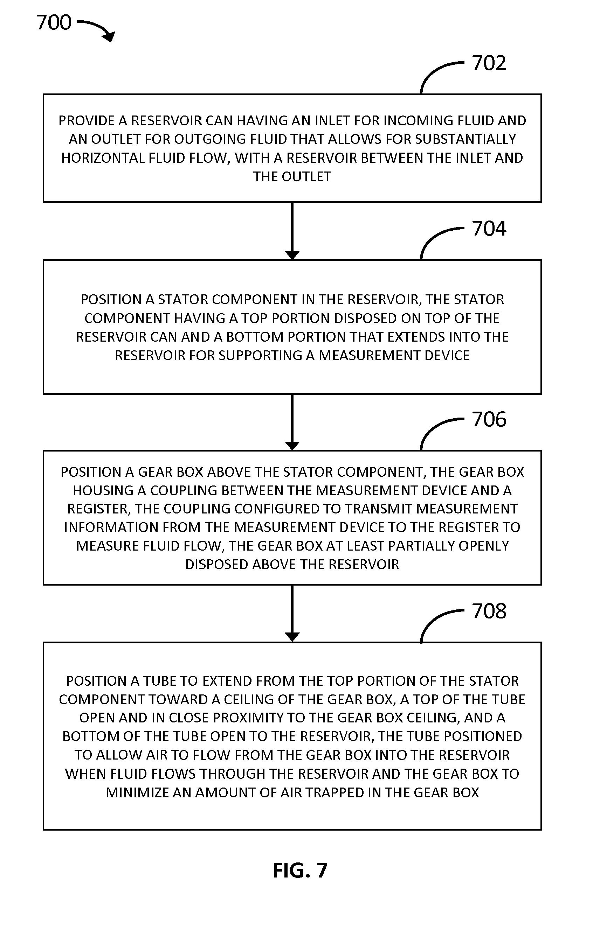

FIGs. 7-12 are flowcharts illustrating example process flows that may be executed using flowmeters and/or fluid flow devices of FIGs. 2-5 and FIGs. 6A-6C, according to embodiments of the present disclosure.

FIG. 7 is a flowchart 700 depicting a method of providing a fluid meter, according to an embodiment of the present disclosure. A reservoir can is provided having an inlet for incoming fluid and an outlet for outgoing fluid that allows for substantially horizontal fluid flow, with a reservoir between the inlet and the outlet (block 702). A stator component is positioned in the reservoir. The stator component includes a top portion disposed on top of the reservoir can and a bottom portion that extends into the reservoir for supporting a measurement device (e.g., a turbine rotatable by flow of fluid through the reservoir from the inlet to the outlet, as depicted in the examples above) (block 704). A gear box is positioned above the stator component at least partially openly disposed above the reservoir. The gear box houses a coupling between the measurement device and a register. The coupling is to transmit measurement information from the measurement device to the register to measure fluid flow (block 706). A tube is positioned to extend from the top portion of the stator component toward a ceiling of the gear box, where the top of the tube is open and in close proximity of (i.e., as close as possible to) the gear box ceiling, and the bottom of the tube is open to the reservoir (block 708). The tube is positioned to allow air to flow from the gear box into the reservoir when fluid flows through the reservoir and the gear box in order to minimize an amount of air in the gear box.

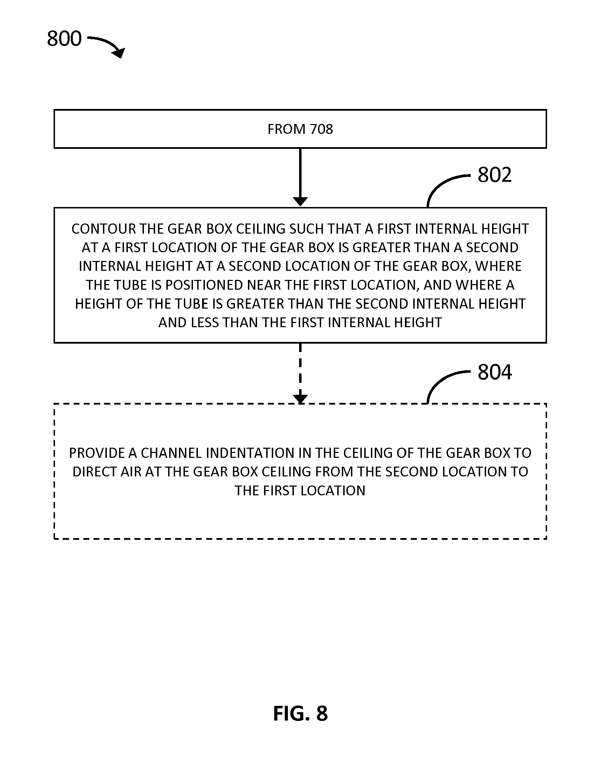

FIG. 8 is a flowchart 800 continuing the method depicted in FIG. 7, according to an embodiment of the present disclosure. The gear box ceiling is contoured such that a first internal height at a first location of the gear box is greater than a second internal height at a second location of the gear box, where the tube is positioned at or near the first location of the gear box, and where a height of the tube is greater than the second internal height of the gear box and less than the first internal height of the gear box (block 802). Optionally, a channel indentation may be provided in the ceiling of the gear box to direct air at the gear box ceiling from the second location to the first location (block 804).

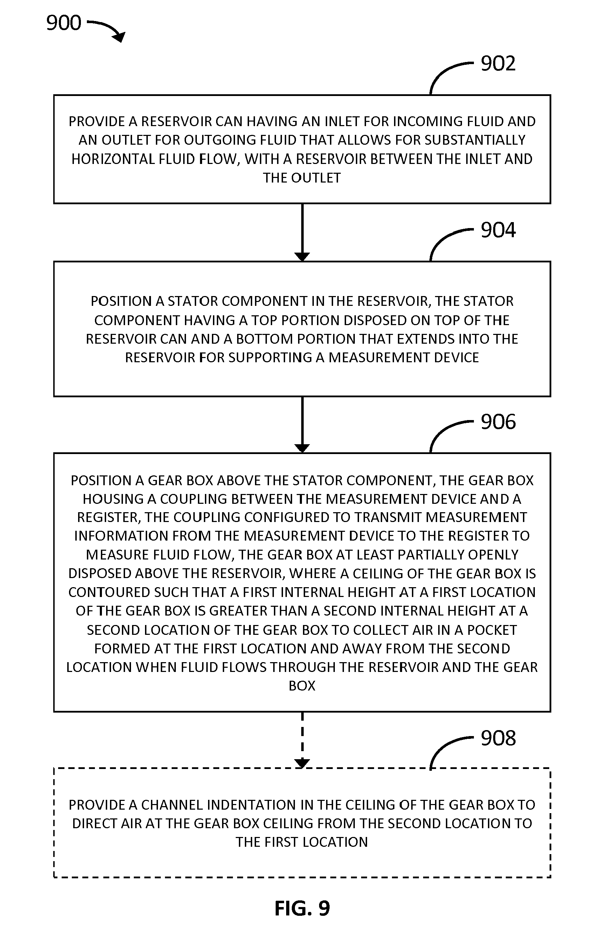

FIG. 9 is a flowchart 900 depicting a method of providing a fluid meter, according to an embodiment of the present disclosure. A reservoir can is provided having an inlet for incoming fluid and an outlet for outgoing fluid that allows for substantially horizontal fluid flow, with a reservoir between the inlet and the outlet (block 902). A stator component is positioned in the reservoir. The stator component includes a top portion disposed on top of the reservoir can and a bottom portion that extends into the reservoir for supporting a measurement device (e.g., a turbine rotatable by flow of fluid through the reservoir from the inlet to the outlet, as depicted in the examples above) (block 904). A gear box is positioned above the stator component at least partially openly disposed above the reservoir. The gear box houses a coupling between the measurement device and a register. The coupling is to transmit measurement information from the measurement device to the register to measure fluid flow. The ceiling of the gear box is contoured such that a first internal height at a first location of the gear box is greater than a second internal height at a second location of the gear box. Such a shape allows air to collect in a pocket formed at the ceiling at the first location and away from the second location (e.g., where the components may be located) when fluid flows through the reservoir and gear box (block 906). Optionally, a channel indentation is provided in the ceiling of the gear box to direct air at the gear box ceiling from the second location to the first location (block 908).

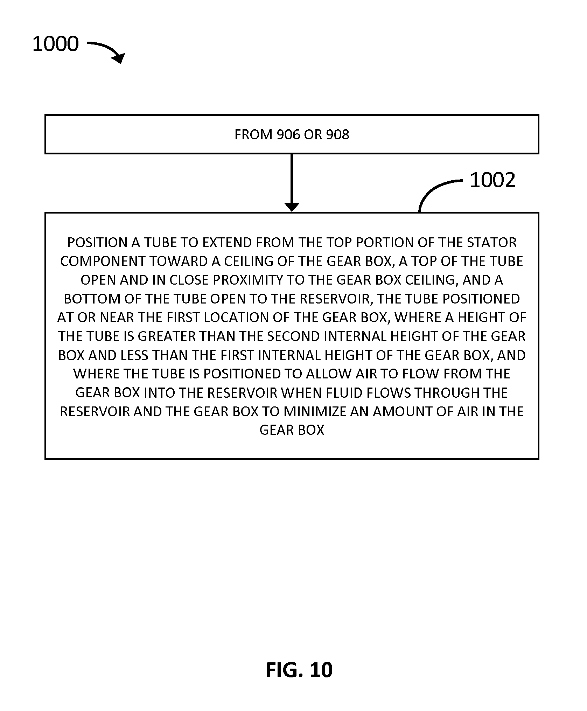

FIG. 10 is a flowchart 1000 continuing the method depicted in FIG. 9, either with or without the option at block 908, according to an embodiment of the present disclosure. A tube is positioned to extend from the top portion of the stator component toward a ceiling of the gear box, with the top of the tube open and in close proximity of (i.e., as close as possible to) the gear box ceiling and the bottom of the tube open to the reservoir. The tube is positioned at or near the first location of the gear box, with the height of the tube greater than the second internal height of the gear box and less than the first internal height of the gear box, to allow air to flow from the gear box into the reservoir when fluid flows through the reservoir and gear box (block 1002).

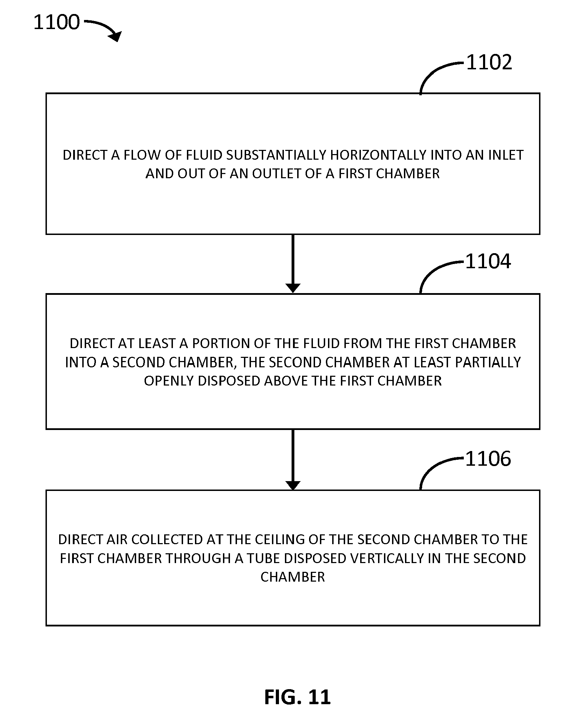

FIG. 11 is a flowchart 1100 depicting a method of minimizing air in a fluid flow device, according to an embodiment of the present disclosure. A flow of fluid is directed substantially horizontally into an inlet and out of an outlet of a first chamber (block 1102). At least a portion of the fluid is directed from the first chamber into a second chamber that is at least partially openly disposed above the first chamber (block 1104). Air collected at the ceiling of the second chamber is directed to the first chamber through a tube disposed vertically in the second chamber (block 1106).

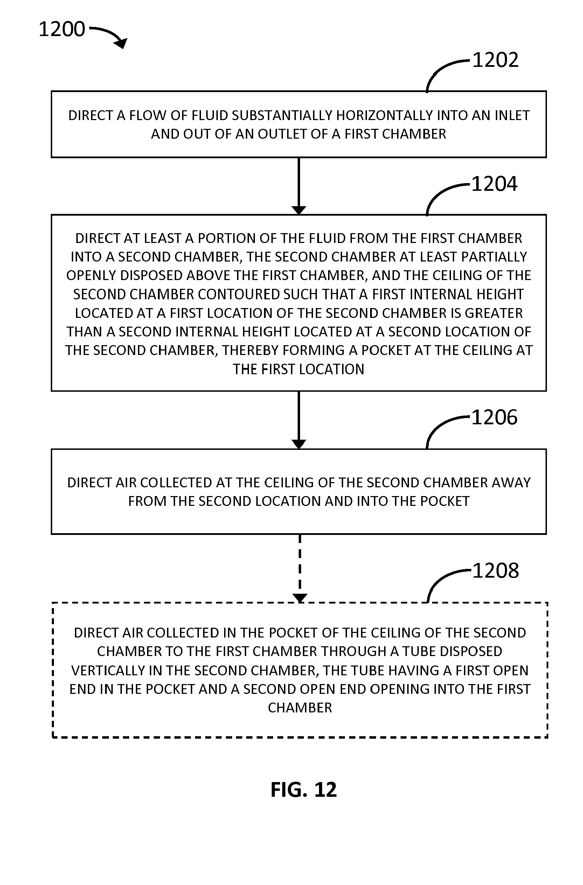

FIG. 12 is a flowchart 1200 depicting a method of minimizing air in a fluid flow device, according to an embodiment of the present disclosure. A flow of fluid is directed substantially horizontally into an inlet and out of an outlet of a first chamber (block 1202). At least a portion of the fluid is directed from the first chamber into a second chamber that is at least partially openly disposed above the first chamber and has a ceiling contoured such that a first internal height at a first location of the second chamber is greater than a second internal height at a second location of the second chamber, thereby forming a pocket at the second chamber ceiling at the first location (block 1204). As the fluid flows into the first and second chambers, air collected at the ceiling of the second chamber moves away from the second location of the second chamber ceiling and into the pocket formed at the first location of the second chamber ceiling (block 1206). Optionally, air collected in the pocket of the second chamber ceiling flows to the first chamber through a tube disposed vertically in the second chamber, the tube having a first open end in the pocket and a second open end opening into the first chamber (block 1208).

The example methods, apparatuses, and/or articles of manufacturing disclosed herein avoid or minimize adverse effects of having air trapped at the top of a fluid flow device (such as a flowmeter where sensitive components may exist), by minimizing or removing the trapped air, and allowing fluid to displace it. These examples disclose just a few possible implementations and uses. Other implementations and uses for the disclosed technology may also be contemplated that are within the scope of this disclosure.

The examples as described and depicted herein do not need to be implemented exactly as shown or described to still be within the scope of this disclosure. For example, many of the examples used herein involve a water meter. However, the fluid does not need to be water, nor does the device need to be a meter to benefit from the disclosed technology. On the contrary, other fluids may be used, and other types of devices may benefit. It should also be noted that the described design may differ and still be within the scope of the claims. For example, it is disclosed that the tube from the gear box to the reservoir, or from the second chamber to the first chamber, is to be disposed vertically. However, the tube does not need to be literally vertical. The tube can be at an angle, can curve or spiral, etc., as long as one open end is near the ceiling of the gear box or second chamber and the other open end opens into the reservoir or first chamber. It may be beneficial for the tube to be substantially vertical, however, as the air may be able to flow out faster. As another example, other-shaped ceilings may be used in the gear box or second chamber. The ceiling does not need to be an inverted dome as shown in the examples herein. The ceiling may have any other shape or contour, as long as the ceiling at a first location is higher than the ceiling at a second location (where the components may be located). This is to protect components that may exist at or near the lower part of ceiling. In the example shown herein, the components are located in the center of the gear box, or second chamber, ceiling. If such components are instead located at an outer edge (and not at the center), the contour of the ceiling may instead have an outer edge that is lower than the center. In another example, if such components exist at one end, the contour of the ceiling may instead slope or be such that the components to be protected are placed at the side with the lower ceiling. These are just a few examples. Other examples may also be contemplated.

The technology described herein provides numerous advantages. For example, for a flowmeter, the ramp-up time to fill the device with fluid and get to production readiness decreases significantly (e.g., is on the order of seconds instead of minutes). In addition, the life of the internal parts/components is prolonged due to less (or possibly no) exposure to adverse effects, such as rust. Further, performance degradation is minimized or avoided, due to the improved ramp-up time and prolonged life of parts / reduced part failure. All of these advantages result in overall cost savings as well. These are just a few noted advantages. Numerous other advantages may also exist.

Although certain example methods, apparatus, and articles of manufacture have been disclosed herein, the scope of coverage of this patent is not limited thereto. On the contrary, this patent covers all methods, apparatus, and articles of manufacture fairly falling within the scope of the claims of this patent.

## Claims

1. A fluid meter configured to minimize trapped air within, comprising:
a reservoir can (102) having an inlet (106) for incoming fluid and an outlet (110) for outgoing fluid that allows for substantially horizontal fluid flow, and having a reservoir (104) between the inlet and the outlet;
a stator component (112) having a top portion disposed on top of the reservoir can (102) and a bottom portion that extends into the reservoir (104) for supporting a measurement device (114);
a gear box (116; 416) above the stator component housing a coupling (118) between the measurement device (114) and a register (120), the coupling (118) configured to transmit measurement information from the measurement device (114) to the register (120) to measure fluid flow, the gear box (116; 416) at least partially openly disposed above the reservoir (104); and
a tube (222; 422) that extends from the top portion of the stator component (112) toward a ceiling of the gear box (116; 416), wherein a top of the tube (222; 422) is open and in close proximity to the gear box ceiling, and wherein a bottom of the tube (222; 422) is open to the reservoir (104), to allow air to flow from the gear box (116; 416) into the reservoir (104) when fluid flows through the reservoir (104) and the gear box (116; 416) to minimize an amount of air trapped in the gear box (116; 416).

2. The fluid meter of claim 1, wherein the gear box ceiling is contoured such that a first internal height at a first location of the gear box (416) is greater than a second internal height at a second location of the gear box (416), wherein the tube (422) is disposed near the first location, and wherein a height of the tube (422) is greater than the second internal height and less than the first internal height.

3. The fluid meter of claim 1 or claim 2, wherein the ceiling of the gear box (116; 416; 516) includes a channel indentation (532) to direct air across the gear box ceiling from the second location to the first location.

4. The fluid meter of any of claims 1-3, wherein the tube (222; 422) is molded as part of the top portion of the stator component (112).

5. The fluid meter of any of claims 1-3, wherein the tube (222; 422) is a standalone part fitted through a hole in the top portion of the stator component (112).

6. A method of minimizing trapped air in a fluid meter, comprising:
providing a reservoir can (102) having an inlet (106) for incoming fluid and an outlet (110) for outgoing fluid that allows for substantially horizontal fluid flow, with a reservoir (104) between the inlet (106) and the outlet (110);
positioning a stator component (112) in the reservoir (104), the stator component (112) having a top portion disposed on top of the reservoir can (102) and a bottom portion that extends into the reservoir (104) for supporting a measurement device (114);
positioning a gear box (116; 416) above the stator component (112), the gear box (116; 416) housing a coupling (118) between the measurement device (114) and a register (120), the coupling configured to transmit measurement information from the measurement device (114) to the register (120) to measure fluid flow, the gear box (116; 416) at least partially openly disposed above the reservoir (104); and
positioning a tube (222; 422) to extend from the top portion of the stator component (112) toward a ceiling of the gear box (116; 416), a top of the tube (222; 422) open and in close proximity to the gear box ceiling, and a bottom of the tube (222; 422) open to the reservoir (104), the tube (222; 422) positioned to allow air to flow from the gear box (116; 416) into the reservoir (104) when fluid flows through the reservoir (104) and the gear box (116; 416) to minimize an amount of air trapped in the gear box (116; 416).

7. The method of claim 6, wherein the positioning of the tube (222; 422) includes molding the tube (222; 422) as part of the top portion of the stator component (112).

8. The method of claim 6, wherein the positioning of the tube (222, 422) includes fitting the tube (222; 422) through a hole in the top portion of the stator component (112).

9. The method of any of claims 6-8, further comprising:
contouring the gear box ceiling such that a first internal height at a first location of the gear box (416) is greater than a second internal height at a second location of the gear box (416), wherein the tube (422) is positioned near the first location of the gear box (416), and wherein a height of the tube (422) is greater than the second internal height and less than the first internal height.

10. The method of any of claims 6-9, further comprising:
providing a channel indentation (532) in the ceiling of the gear box (116; 416; 516) to direct air across the gear box ceiling from the second location to the first location.
